# FASCICULE DE BREVET EUROPEEN

(11) **EP 3 947 315 B1**
(45) Date de publication et mention de la délivrance du brevet: **24.01.2024**
(21) Numéro de dépôt: 20712613.7
(22) Date de dépôt: 26.03.2020
(51) Int. Cl.: C04B 26/26

(54) **ADDITIFS POUR MATÉRIAU BITUMINEUX COULE A FROID AVEC UN LIANT PARAFFINIQUE A MONTÉE EN COHÉSION RAPIDE**
ADDITIF FÜR BITUMINÖSES KALTEIBAUMATERIAL MIT EINEM PARAFFINBINDER MIT HÖHERER SCHNELLBINDUNG
ADDITIFS FOR BITUMINOUS COLD-MIX MATERIAL WITH A PARAFFINIC BINDER WITH ENHANCED FAST COHESION

(30) Priorité: 26.03.2019 FR 1903170
(43) Date de publication de la demande: 09.02.2022
(73) Titulaire: Vinci Construction, 92000 Nanterre (FR)
(72) Inventeur: LEBARBE, Thomas, 33980 AUDENGE (FR); DELFOSSE, Frédéric, 33600 PESSAC (FR); RAS, Sophie, 33700 MERIGNAC (FR)
(74) Mandataire: Regimbeau
(86) Numéro de dépôt international: PCT/EP2020/058507
(87) Numéro de publication internationale: WO 2020/193692

(56) Documents cités:
- EP-A1- 2 236 476
- US-A- 5 019 610

## Description

La présente invention concerne de nouveaux additifs pour matériaux bitumineux coulés à froid permettant d'améliorer les propriétés de montée en cohésion et de fragilité au jeune âge dudit matériaux bitumeux.

Les matériaux bitumineux coulés à froid, encore appelés enrobés coulés à froid, sont des « enrobés hydrocarbonés réalisés à partir de granulats, d'un liant hydrocarboné et éventuellement de dopes et/ ou d'additifs, dont les caractéristiques permettent un enrobage sans séchage et chauffage des granulats », définition de la norme NF P 98-149 (juin 2000) (Terminologie des enrobés hydrocarbonés). Cette technique, dite technique "à froid", présente au niveau environnemental l'avantage important de ne pas produire d'émissions de fumées, ce qui diminue les nuisances des travailleurs et des riverains. Elle présente aussi une grande souplesse d'emploi, du fait des basses températures requises pour leur application, en particulier dans des endroits où il n'est pas possible d'avoir un dispositif de chauffage. Elle permet aussi de limiter le chauffage lors de l'application du bitume à des températures élevées et sont de ce fait peu consommatrices en énergie.

Les matériaux bitumineux coulés à froid sont constitués d'un mélange de granulats, d'émulsion de bitume (modifié ou non), de fibres, d'additifs minéraux (ciment...) et organiques (dope). Ce mélange est fabriqué et mis en oeuvre par une machine automotrice spécialement conçue et adaptée.

Après sa mise en oeuvre et rupture de l'émulsion, ce revêtement coulé à froid en très faible épaisseur (généralement de 6 à 13 mm d'épaisseur par couche) doit atteindre sa consistance définitive (montée en cohésion) très rapidement.

Les deux paramètres essentiels gouvernant la formulation, la fabrication et la mise en oeuvre des matériaux bitumineux coulés à froid sont :
- la maniabilité du mélange granulats/émulsion : optimisation des proportions des différents constituants (eau, additifs, formulation de l'émulsion) pour obtenir un délai de mise en oeuvre suffisant et ainsi permettre le mélange des granulats avec l'émulsion dans le malaxeur ;
- la cinétique de "montée en cohésion" : le matériau bitumineux coulé à froid, après l'application sur la chaussée, doit acquérir une montée en cohésion le plus rapidement possible pour l'ouverture au trafic. Pour des températures de mûrissement allant de 7 à 40°C, un délai de 30 minutes est considéré comme pertinent pour l'homme de l'art pour répondre aux cahiers des charges les plus stricts.

Les gouttelettes de bitume initialement séparées confèrent au système un caractère fluide et une mise en place aisée à l'aide des machines spécifiques pour les matériaux bitumineux coulés à froid. Le système est alors visqueux. Le temps caractéristique pendant lequel cet état perdure est appelé temps de maniabilité (tm).

Dans un second temps, les gouttelettes de bitume coalescent et forment un gel. Lorsque toutes les gouttelettes de bitume sont regroupées, on considère que l'émulsion a rompu (temps de rupture : tr). Le système est alors viscoélastique. Le système tend par la suite à se contracter de façon à réduire la surface de contact entre l'eau et le bitume (temps de cohésion : tc). Ce processus suit une cinétique qui dépendra des répulsions électrostatiques entre gouttelettes et donc de la nature du bitume et de l'émulsifiant.

La cinétique de la réaction de coalescence entre les gouttelettes de bitume conditionnera la rapidité de la montée en cohésion du matériau bitumineux coulé à froid qui pourra se traduire par une sensibilité ou non du matériau aux conditions de mûrissement au jeune âge.

Pour améliorer la montée en cohésion des matériaux bitumineux coulés à froid pour un bitume paraffinique, on a proposé l'ajout au bitume de dopes d'acides gras. Toutefois, ces ajouts n'ont pas permis une remise sous trafic rapide (inférieure à 30 minutes) en raison d'une montée en cohésion trop lente du matériau. La demande WO2009/144544 propose l'utilisation d'acides gras polymérisés. Toutefois, les valeurs de cohésion obtenues à 30 min sont significativement inférieures à 2 N.m (ou 20 kg.cm) ce qui signifie que la remise sous trafic ne peut pas se faire dans la demi-heure. Or sur certains chantiers, notamment en zone urbanisée, il est important de pouvoir ouvrir la route à la circulation plus rapidement. Plus récemment, les demandes FR3020065 et WO2014/154985 décrivent l'utilisation d'émulsions de bitume formulées à l'aide de tensioactifs spécifiques. Cependant l'absence d'additifs dans le bitume pénalise la remontée en cohésion du matériau. Enfin la demande FR3017385 propose l'utilisation de tensioactifs spécifiques dans la formulation d'émulsions de bitume ainsi que l'ajout d'acides gras dans le bitume avant émulsification. Cette méthode de modification permet de considérablement accélérer la remontée en cohésion du matériau. Dans ces circonstances, le but de la présente invention est de proposer un matériau bitumineux coulé à froid, ayant une montée en cohésion et un durcissement suffisamment rapides afin de permettre une remise sous trafic rapide, en particulier en moins d'une heure, plus avantageusement en moins de 30 minutes, encore plus avantageusement en moins de 20 minutes.

Un autre but de l'invention est de proposer un matériau bitumineux coulé à froid, en particulier à base de bitume paraffinique, pouvant être malaxé sans rupture pendant quelques dizaines de secondes, de préférence pendant au moins 30 secondes, avantageusement au moins 40 secondes, plus avantageusement au moins 90 secondes.

Un autre objectif de l'invention est de proposer un matériau bitumineux coulé à froid ayant une bonne tenue mécanique. Le matériau une fois mis sous circulation, doit notamment résister aux agressions engendrées par les pneumatiques des véhicules.

Le matériau bitumineux coulé à froid selon l'invention peut avantageusement être mise en oeuvre également en arrière-saison : temps pluvieux, zones d'ombres, température d'application froide mais supérieure à 5°C.

### Définitions

On entend par "liant" tout liant hydrocarboné d'origine fossile ou de synthèse utilisable pour la réalisation de matériaux routiers, comprenant du bitume pur ou modifié par ajout de polymère(s) notamment. Le liant comprend du bitume et l'additif selon l'invention.

Les termes « liant », « liant hydrocarboné », et « liant bitumineux » sont utilisés de manière interchangeable dans la présente description.

Au sens de la présente invention, le terme « bitume » englobe aussi bien les produits hydrocarbonés issus des produits houillers ou pétroliers ou de gisements naturels que les produits hydrocarbonés synthétiques.

Par « bitume ayant naturellement » on désigne le bitume avant toute éventuelle additivation, telle que l'ajout de dopes qui viendrait ultérieurement modifier l'indice d'acide.

L'indice d'acide est le nombre de milligrammes d'hydroxyde de potassium nécessaires pour la neutralisation des acides libres contenus dans un gramme de bitume. Il peut être mesuré par les protocoles décrit dans la norme ASTM D664- 18 (2018-11-01) ou la norme NF T 66-066 (2004-07-01).

On entend par « bitume paraffinique » un bitume qui contient des paraffines ou fractions cristallisables, avantageusement en des teneurs mesurées par analyse calorimétrique différentielle (ACD ou DSC en anglais) allant de 0,5 à 6% en poids, par rapport au poids du bitume. Un bitume paraffinique a naturellement un indice d'acide inférieur à 2 mg KOH/g de bitume, avantageusement inférieur à 1 mg KOH/g de bitume.

L'abréviation « MBCF » désigne un « matériau bitumineux coulé à froid ».

Quatre critères sont considérés comme critiques pour la réussite d'un matériau bitumineux coulé à froid :
- Le temps de maniabilité, encore appelé temps de fluidité ou de consolidation : temps déterminé comme la durée entre (1) le début de mélange de la fraction solide, notamment la fraction solide minérale, et de l'émulsion de bitume et (2) la prise du matériau bitumineux coulé à froid.
- Le temps de rupture, encore appelé temps de prise : temps pour lequel l'émulsion dans le matériau bitumineux coulé à froid est totalement rompue.
- Le temps de cohésion : temps pour lequel on considère que la cohésion du matériau bitumineux coulé à froid est suffisante pour l'ouverture au trafic.
- La résistance à l'usure (ou à l'abrasion). Essai effectué après un mûrissement plus ou moins long pour s'assurer après la remise sous trafic de la durabilité du matériau bitumineux coulé à froid. En particulier, on veut éviter un gravillonnage.

### Temps de maniabilité

Afin d'évaluer le temps de maniabilité d'un matériau bitumineux coulé à froid, pour assurer une mise en oeuvre par la machine d'application, on effectue en laboratoire des essais dans un récipient sur des gâchées de 400 g à 1000 g de matériaux secs. Après mélange des constituants, on apprécie le changement d'état du matériau bitumineux coulé à froid (passage de l'état liquide à pâteux) en agitant manuellement à l'aide d'une spatule à vitesse constante. Le changement d'état observé donne le temps de prise.

Cet essai est réalisé à une température contrôlée (classiquement entre 20 et 25 °C). Les exigences sont un temps de prise supérieur à 30 s, avantageusement supérieur à 40 s, plus avantageusement supérieur à 90 s, encore plus avantageusement compris entre 90 et 180 s, encore plus avantageusement compris entre 90 et 120 s.

### Temps de rupture

A l'aide de l'appareil de cohésion (NF EN 12274-4 (2018-03-28), un papier buvard, soumis à une pression de 0,2 MPa, est appliqué à la surface d'une galette du matériau bitumineux coulé à froid pour déterminer le temps à partir duquel le papier n'est plus tâché par l'émulsion. Ce temps définit le temps de rupture de l'émulsion.

Dans le cadre de la présente l'invention, le temps de rupture est avantageusement inférieur à 20 min.

### Tests de cohésion / résistance à l'usure

### Essai de cohésion Benedict

Le temps de cohésion peut être déterminé à partir de l'essai normalisé NF EN 12274-4 avec un cohésivimètre Bénédict. Le formulateur enregistre en fonction du temps de mûrissement la cohésion du matériau bitumineux coulé à froid.

Cet essai permet de juger de la vitesse de mûrissement d'un matériau bitumineux coulé à froid en suivant l'évolution de la prise de cohésion dans le temps, par des mesures effectuées à 5, 10, 15, 20, 30 et 60 minutes. On définit ainsi le temps (temps de consolidation) au bout duquel le couple mesuré est supérieur à 20 kg.cm. Ce temps permet de fixer un délai minimum de remise de la chaussée sous trafic sans risque pour le revêtement.

Pour optimiser le temps d'ouverture au trafic, on cherche à obtenir une valeur de couple seuil (dépendant des conditions de travail propres aux entreprises) le plus vite possible.

Dans le cadre de la présente invention, la valeur de couple seuil est de 20 kg.cm, dans des conditions de température ambiante, variant de 18°C à 25°C.

En fonction de l'origine du bitume, le temps nécessaire pour obtenir ce seuil de cohésion peut varier de 10 minutes à près d'une heure, voire deux heures. L'objectif de l'invention est de réduire ce temps à moins d'une heure, avantageusement moins de 30 min, y compris avec un bitume paraffinique ou un bitume de synthèse.

On peut compléter la valeur obtenue par une observation de l'état de l'éprouvette à la fin du test :
- D pour "destruction" : L'échantillon est détruit
- F pour "Fissuré" : L'échantillon est fissuré
- N pour "Normal" : L'échantillon est légèrement endommagé (quelques pertes de granulats)
- S pour "Solide" : Seul le film de bitume est parti de l'échantillon.

### Essai de fracture

Cet essai a été développé pour évaluer la résistance à la traction et à la rupture par torsion des matériaux bitumineux coulés à froid. Des éprouvettes de matériau bitumineux coulé à froid de dimension 120* 120* 10 mm sont fabriquées après avoir vérifié le temps de prise.

Après un temps de 30 minutes à 18°C-20°C, 55 % d'hygrométrie, le matériau bitumineux coulé à froid est démoulé et positionné sur l'appareil avec un contrepoids placé sur sa partie fixe (en général, la moitié de l'enrobé est placé dans le vide). On mesure alors le temps nécessaire à la cassure de l'enrobé après ouverture de la trappe. Le résultat est donné en secondes et représente le temps de fracture. Plus le temps est élevé, plus le matériau bitumineux coulé à froid est résistant en flexion et donc plus la montée en cohésion est avancée.

On considère que la montée en cohésion est bonne si dans les conditions standards de conservation (30 min à 18°C-20°C, 55 % d'hygrométrie) le temps au bout duquel intervient la fracture est supérieur à 10 s, avantageusement supérieur à 15 s. En fonction de la fraction granulaire, on peut obtenir des temps de fracture de l'ordre de 50 s ou 70 s. Par ailleurs, l'essai de fracture peut être sévérisé (30min à 10°C, 55% d'Hygrométrie) afin d'accentuer les différences entre formules.

Modification de l'essai normalisé de résistance à l'usure WTAT (Wet track abrasion test) L'essai NF EN 12274-5 (4.3.2) (2018-03-14) peut être utilisé comme décrit dans la norme et dans ce cas on évalue la cohésion d'un matériau bitumineux coulé à froid après un mûrissement favorable (au moins 15 h à 60°C).

Cependant, cet essai normalisé seul n'est pas représentatif de la mise en oeuvre sur chantier ; les conditions de mûrissement étant trop favorables. Afin de se rapprocher des problèmes de cinétique de montée en cohésion au jeune âge, un autre essai a été développé.

Cet essai consiste à réaliser l'essai d'usure tel que décrit dans la norme NF EN 12274-5 (2018-03-14) après des conditions de mûrissement plus sévères pour qualifier les performances mécaniques du matériau bitumineux coulé à froid lors de sa mise sous trafic. Par formule, deux essais sont réalisés, après une heure de mûrissement à température ambiante :
- 18 h à 55 % d'hygrométrie et 18°C : conditions de mûrissement favorables, simulation d'un mûrissement par temps sec,
- 18 h à 100 % d'hygrométrie et 18°C : conditions de mûrissement défavorables, simulation d'un mûrissement par temps humides.

Par ailleurs, l'essai de résistance à l'usure WTAT peut être d'avantage sévérisé (18h à 10°C, 100% d'Hygrométrie) afin d'accentuer les différences entre les formules.

Après ces mûrissements, les éprouvettes sont immergées 1 heure dans l'eau avant d'être abrasées sous eau pendant 5 minutes à température ambiante.

Cet essai a pour but d'évaluer l'influence des conditions de mûrissement (température, hygrométrie) sur les propriétés mécaniques au jeune âge d'un matériau bitumineux coulé à froid. Cet essai peut être réalisé à trois températures (10, 18 ou 30°C) et à deux hygrométries (55 % et 100 %) différentes.

On spécifie un pourcentage de perte de masse (par rapport à la zone abrasée) en fonction des conditions de mûrissement :
- < 5 % de perte si l'hygrométrie est de 55 %, à 18°C
- < 25 % de perte si l'hygrométrie est de 100 %, à 18°C.

L'invention a pour premier objet un matériau bitumineux coulé à froid, obtenu par mélange d'une fraction solide, notamment d'une fraction solide minérale, avec une émulsion cationique de bitume, ladite émulsion cationique de bitume comprenant un additif, caractérisé en ce que ledit additif est un polymère thermoplastique compatible avec le bitume, ayant au moins une fonction acide carboxylique, le polymère étant un polyester, un polyamide, un poly(ester-amide), un polyéther, un polyacrylate, un polydiène, ou un copolymère de monomères diènes et vinyliques.

Avantageusement, ledit additif est un polymère thermoplastique compatible avec le liant bitumineux, ayant au moins une fonction acide carboxylique, le polymère étant un polyester, un polyamide, un poly(ester-amide), un polyacrylate, un polydiène, ou un copolymère de monomères diènes et vinyliques.

### Propriété du matériau bitumineux selon l'invention

Avantageusement, le matériau bitumineux coulé à froid selon l'invention est de préférence obtenu par mélange d'une fraction solide, notamment d'une fraction solide minérale, avec une émulsion cationique de bitume, ladite émulsion cationique de bitume comprenant 50 % à 70 % d'un liant hydrocarboné comprenant le bitume et l'additif selon l'invention. Le bitume est avantageusement un bitume paraffinique ou un bitume de synthèse.

Le matériau bitumineux coulé à froid selon l'invention présente une bonne montée en cohésion selon les spécifications suivantes :
- Une valeur de cohésion torsion, mesurée selon l'essai cohésion Bénédict décrit ci-dessus, supérieure ou égale à 20 kg/cm à 30 min. Avantageusement, lorsque l'on observe de l'état de l'éprouvette à la fin du test de cohésion Benedict, celle-ci est soit normale, soit solide.
- Un temps de fracture, mesuré selon la méthode décrite ci-dessus, au moins aussi long que celui obtenu avec un bitume naphténique.
- une perte de masse, mesurée selon l'essai WTAT décrit ci-dessus après un temps de mûrissement de 18 h à 18°C et un degré d'hygrométrie de 55 %, inférieure à 5 %.
- une perte de masse, mesurée selon l'essai WTAT décrit ci-dessus après un temps de mûrissement de 18 h à 18°C et un degré d'hygrométrie de 100 %, inférieure à 25 %.

Le matériau bitumineux coulé à froid présente avantageusement un temps de fracture de l'éprouvette supérieur à 10 s, plus avantageusement supérieur à 15 s, encore plus avantageusement supérieur à 20 s, encore plus avantageusement supérieur à 30 s. Toutefois, en fonction de la fraction granulaire, la montée en cohésion peut être suffisante alors même que le temps de fracture de l'éprouvette est inférieur à ces valeurs.

Le matériau bitumineux coulé à froid présente avantageusement en outre les spécifications suivantes :
- un temps maniabilité supérieur ou égale à 30s, avantageusement supérieur ou égale à 40s, plus avantageusement supérieur ou égale à 90 s, encore plus avantageusement compris entre 90 s et 120 s,
- un temps de rupture inférieur ou égal à 20 min.

En chantier, avec ce matériau bitumineux coulé à froid on n'observe pas de gravillonnage après remise sous trafic rapide, c'est-à-dire de l'ordre de la demi-heure. Ce matériau bitumineux coulé à froid peut être appliqué dans des conditions ambiantes pour une température variant avantageusement de 5 à 40°C, plus avantageusement de 10°C à 40°C, avec un degré d'hygrométrie pouvant aller jusqu'à 100 %.

Ce matériau bitumineux coulé à froid présente de bonnes propriétés mécaniques, compatibles avec les utilisations souhaitées, en particulier qualité d'enrobage, solidité de l'enrobage (pas de désenrobage), résistance à l'abrasion (tests WTAT).

Ces très bonnes propriétés peuvent être obtenues en utilisant conjointement avec le bitume, en particulier un bitume ayant naturellement un indice d'acide inférieur à 2 mg KOH/g de bitume, un additif selon l'invention.

Dans le cadre de l'invention, le matériau bitumineux coulé à froid est obtenu par mélange d'une fraction solide, notamment d'une fraction solide minérale, avec une émulsion cationique de bitume.

Cette émulsion cationique de bitume comprend notamment de l'eau, un liant hydrocarboné, au moins un émulsifiant cationique et un acide.

Le liant hydrocarboné comprend du bitume et l'additif selon l'invention.

### Liant hydrocarboné

Dans l'émulsion, la teneur en liant varie avantageusement de 50 à 75% en poids de liant, par rapport au poids total de l'émulsion, plus avantageusement de 60 à 70% en poids.

Le liant hydrocarboné comprend du bitume.

Le liant hydrocarboné comprend avantageusement du bitume ayant naturellement un indice d'acide inférieur à 2 mg KOH/g de bitume, avantageusement inférieur à 1 mg KOH/g de bitume. L'indice d'acide d'un tel bitume peut être nul.

Le bitume ayant naturellement un indice d'acide inférieur à 2 mg KOH/g de bitume est avantageusement un bitume paraffinique ou un bitume de synthèse. Le bitume de synthèse a naturellement un indice d'acide nul.

Afin de décrire au mieux les différentes familles constituants le bitume de synthèse nous pouvons citer les brevets suivants : FR 1316712, GB 1226234, EP 0179510, EP 0330281 et US 5021476.

Le liant pourra être un liant mou à dur, avantageusement d'un grade allant de 160/220 à 10/20 (classes de pénétrabilité déterminées selon les normes NF EN 12591 (2009-12-01) et NF EN 13924 (2016-03-17)).

Par exemple pour un MBCF, le liant est un liant ayant une pénétrabilité mesurée selon la norme EN1426 (2018-01-06) comprise entre 50 et 220, plus avantageusement entre 50 et 100.

Le liant peut comprendre des additifs couramment utilisés dans le domaine routier, tels que des polymères autres que ceux objets de l'invention (EVA ou éthylène-acétate de vinyle, SBS ou styrène-butadiène-styrène, SB ou styrène-butadiène) réticulés ou non, des poudrettes de caoutchouc, des dispersions aqueuses de polymères (latex SBR) des cires végétales ou d'origine pétrochimique, des dopes d'adhésion, des acides en particulier des acides polyphosphoriques.

Le liant comprend en outre un additif selon l'invention.

L'additif selon l'invention est un polymère thermoplastique compatible avec le bitume, ayant au moins une fonction acide carboxylique, le polymère étant choisi parmi un polyester, un polyamide, un poly(ester-amide), un polyéther, un polyacrylate, un polydiène, ou un copolymère de monomères diènes et vinyliques, et leurs combinaisons.

Cet additif est compatible avec le liant hydrocarboné, ayant ainsi une bonne affinité avec le liant bitume. En particulier, il est soluble dans le bitume. L'affinité de l'additif avec le liant hydrocarboné peut être vérifiée en utilisant le test de stabilité au stockage décrit dans la norme NF EN 13399 (août 2000).

Le liant hydrocarboné comprend 0,02 à 10% en poids, par rapport au poids du liant, dudit additif. En particulier, le liant hydrocarboné comprend 0,1 à 4% en poids, avantageusement 0,2 à 2,5 % en poids, plus avantageusement 0,5 à 1,5% en poids, par rapport au poids du liant, dudit additif.

Cet additif comprend au moins une fonction acide carboxylique (-COOH) permettant ainsi la formation d'un ion carboxylate par remontée de pH du système.

La ou les fonctions acide carboxylique peuvent être toutes totalement acide, ou totalement ou partiellement neutralisée par tout agent de neutralisation. A titre d'exemple d'agent de neutralisation, on peut citer les hydroxydes de sodium, de potassium, les hydroxydes et/ou oxydes de calcium, de magnésium, l'ammoniaque, ou leurs combinaisons.

L'additif selon l'invention est un polymère, c'est-à-dire qu'il comprend plusieurs unités de répétition. Par « plusieurs », on entend « au moins deux », avantageusement « au moins trois ». Ce polymère comprend au moins une fonction acide carboxylique. Au sens de l'invention le terme « polymère » englobe donc les oligomères.

Ce polymère est thermoplastique, avantageusement linéaire.

Le polymère thermoplastique répond avantageusement à l'une ou plusieurs, de préférence à toutes, des caractéristiques suivantes :
- le polymère thermoplastique a une masse moléculaire en poids d'au moins 500 g/mol, plus avantageusement de 500 g/mol à 50 000 g/mol, encore plus avantageusement de 500g/mol à 5 000g/mol ;
- le polymère thermoplastique a un indice d'acide inférieur à 200 mgKOH/g, plus avantageusement inférieur à 80 mgKOH/g. L'indice d'acide est la masse d'hydroxyde de potassium (exprimé en mg) nécessaire pour neutraliser les acides gras libres contenus dans un gramme de polymère, additif de l'invention.

Selon l'invention, le polymère est choisi parmi un polyester, un polyamide, un poly(ester-amide), un polyéther, un polyacrylate, un polydiène, ou un copolymère de monomères diènes et vinyliques et leurs combinaisons.

Dans une première variante de l'invention, le polymère thermoplastique est choisi parmi un polyester, un polyamide, un poly(ester-amide) et leurs combinaisons. Ainsi, en fonction de sa nature, le polymère comprendra une ou deux fonctions acide carboxylique terminales. Le polyester peut être synthétisé par différentes méthodes connues de l'homme de l'art. Avantageusement, le polyester est obtenu par polymérisation d'au moins un hydroxyacide de formule (I) :

HO-C(O)-R-CR'(OH)-R" (I)

Où
R est une chaîne hydrocarbonée, aliphatique, en C8-C20, saturée ou insaturée, éventuellement ramifiée, comprenant éventuellement un ou des atomes d'oxygène, comprenant une chaine principale linéaire d'au moins 8 atomes de carbone
R', R" représentent chacun, indépendamment l'un de l'autre, H ou une chaîne hydrocarbonée, aliphatique, en C1-C10
Avantageusement, R répond à l'une ou plusieurs des caractéristiques suivantes, avantageusement à l'ensemble des caractéristiques suivantes :
   - R est une chaîne hydrocarbonée linéaire ;
   - R est une chaîne hydrocarbonée qui peut être saturée ou insaturée. L'insaturation, lorsqu'elle est présente, est avantageusement une double liaison C=C ou une triple liaison C=C, plus avantageusement une double liaison C=C. Dans un mode de réalisation, R est une chaîne hydrocarbonée qui comprend 0 à 3 doubles liaisons C=C, avantageusement 0 à 2 doubles liaisons C=C, plus avantageusement 0 ou 1 double liaison C=C ;
   - R est une chaîne hydrocarbonée en C8-C15, plus avantageusement en C10-C15.

En outre, R peut comprendre un ou plusieurs atomes d'oxygène soit interrompant la chaîne (fonctions éther) soit pendant sous la forme de fonctions hydroxyle ou éther en C1-C6. Avantageusement, R' représente H ou une chaîne hydrocarbonée, aliphatique, linéaire, saturée, plus avantageusement en C1-C4. Plus avantageusement, R' représente H. Avantageusement, R" représente une chaîne hydrocarbonée, aliphatique, linéaire, saturée ou insaturée. L'insaturation, lorsqu'elle est présente, est avantageusement une double liaison C=C ou une triple liaison C=C, plus avantageusement une double liaison C=C. Dans un mode de réalisation, R" est une chaîne hydrocarbonée qui comprend 0 ou 1 double liaison C=C. Avantageusement, R" est une chaîne en C4-C8. R" peut comprendre un ou plusieurs atomes d'oxygène soit interrompant la chaîne (fonctions éther) soit pendant sous la forme de fonctions hydroxyle ou éther en C1-C6.

On peut homopolymériser un hydroxyacide de formule (I) ou copolymériser plusieurs hydroxyacides de formule (I).

En outre, la réaction de polymérisation peut être conduite en présence d'acides gras non hydroxylés, en particulier des acides gras saturés ou insaturés oléfiniques comprenant de 8 à 30 atomes de carbone, éventuellement substitués par un radical alkyle en C1-C4. On peut par exemple citer l'acide oléique, l'acide palmitique, l'acide stéarique, l'acide linoléique, l'acide 2-ethylhexanoique, ...

L'hydroxyacide de formule (I) à polymériser peut comprendre jusqu'à 20% en poids, tel que de 10 à 15% en poids, par rapport au poids de l'hydoxyacide, de tels acides gras non hydroxylés.

Le polyester ainsi obtenu peut répondre à la formule suivante (II) :

HO-C(O)-R-CR'R"O-[C(O)-R-CR'R"O-]ₙC(O)-R-CR'R"R‴ (II)

où
n varie avantageusement de 0 à 5
R'" représente OH ou H ou un radical alkyle en C1-C4
R, R', R" sont tels que définis précédemment et peuvent varier d'une unité répétitive à l'autre en cas de copolymérisation de plusieurs hydroxyacides de formule (I).

On peut également copolymériser au moins un hydroxyacide de formule (I), éventuellement en présence d'acides gras non hydroxylés, avec au moins un diacide carboxylique. Avantageusement, le diacide carboxylique est de formule (III) :

HO-C(O)-R2-C(O)-OH (III)

où
R2 est une chaîne hydrocarbonée aliphatique en C1-C60, saturée ou insaturée,
éventuellement ramifiée, comprenant éventuellement un ou des atomes d'oxygène, ou un groupement aromatique.

Avantageusement, R2 répond à l'une ou plusieurs des caractéristiques suivantes, avantageusement à l'ensemble des caractéristiques suivantes :
- R2 est une chaîne aliphatique
- R2 est une chaîne hydrocarbonée linéaire ;
- R2 est une chaîne hydrocarbonée qui peut être saturée ou insaturée. L'insaturation, lorsqu'elle est présente, est avantageusement une double liaison C=C ou une triple liaison C=C, plus avantageusement une double liaison C=C. Dans un mode de réalisation, R est une chaîne hydrocarbonée qui comprend 0 à 3 doubles liaisons C=C, avantageusement 0 à 2 doubles liaisons C=C, plus avantageusement 0 ou 1 double liaison C=C ;

En outre, R2 peut comprendre un ou plusieurs atomes d'oxygène soit interrompant la chaîne (fonctions éther) soit pendant sous la forme de fonctions hydroxyle ou éther en C1-C6. Dans un mode de réalisation, R2 est une chaîne hydrocarbonée en C6-C50, plus avantageusement en C10-C40. Dans un mode de réalisation, R2 est une chaîne hydrocarbonée en C1-C10, plus avantageusement en C1-C6.

R2 peut également être un groupement aromatique, en particulier un benzyle ou un napthyle. Le noyau aromatique peut être substitué ou non, les substituants possibles étant une fonction hydroxyle ou par un radical alkyle en C1-C4.

Le polyester ainsi obtenu peut répondre à la formule suivante (IV) :

HO-C(O)-R-CR'R"O-[C(O)-R-CR'R"O-]ₙC(O)-R2-C(O)-[OCR'R"-R-C(O)]ₘOCR'R"-R-COOH (IV)

où
n varie avantageusement de 0 à 5
m varie avantageusement de 0 à 5
R, R', R", R2 sont tels que définis précédemment et peuvent varier d'une unité répétitive à l'autre en cas de copolymérisation de plusieurs hydroxyacides de formule (I).

Avantageusement, le polymère est choisi parmi le poly(acide ricinoléique), le poly(acide 12-hydroxystéarique) et leurs combinaisons.

Dans un autre mode de réalisation, le polymère peut être un polyester, un polyamide ou un polyester-amide. Le polymère peut être obtenu par copolymérisation d'au moins un diacide carboxylique et d'au moins un composé di-fonctionnel choisi parmi un diol, une diamine et leurs combinaisons. Il est entendu que l'on peut copolymériser un ou plusieurs diacides carboxyliques avec un ou plusieurs composés di-fonctionnels.

Avantageusement le diacide carboxylique est un diacide en C3-C36, avantageusement en C3-C20, plus avantageusement en C4-C16, encore plus avantageusement en C4-C12. Le diacide est avantageusement aliphatique, avantageusement linéaire ou ramifié. Le diacide peut comprendre une ou plusieurs insaturations, en particulier oléfinique.

Le diacide carboxylique est avantageusement un dimère d'acides gras, l'acide sébacique, l'acide azélaique, l'acide adipique, l'acide glutarique, l'acide succinique, l'acide maléique, l'acide itaconique, et leurs combinaisons.

L'acide gras est avantageusement choisi parmi l'acide crotonique, l'acide iso-crotonique, l'acide undécylénique, l'acide hypogéïque, l'acide palmitoléïque, l'acide oléique, l'acide élaïdique, l'acide vaccénique, l'acide pétrosélinique, l'acide gadoléïque, l'acide gondoïque, l'acide cétoléique, l'acide érucidique, l'acide brassidique, l'acide nervonique, l'acide tiglique, l'acide sorbique, l'acide linoléïque l'acide hiragonique, l'acide linolénique, l'acide γ-linolénique, l'acide éléostéarique, l'acide parinarique, l'acide homo-γ-linolénique, l'acide arachidonique, l'acide clupanodonique, et leurs combinaisons.

Avantageusement le diol est un diol comprenant au moins trois atomes de carbone. Le diol peut en particulier être un alkyle diol, avantageusement en C3-C36, le terme alkyle englobant les alcènes et les alcynes, ou un polymère hydroxytéléchélique. Avantageusement, le diol est un alkyle diol insaturé en C3-C20, tel que par exemple le dodecanediol, le decanediol, l'hexane diol, le butanediol, ou le propanediol. Avantageusement le diol est un polymère hydroxytéléchélique, le polymère étant choisi parmi les polydiènes ou les polyethers, tel que par exemple les polybutadiènes hydroxytéléchéliques, les polytetrahydrofurane hydroxytéléchéliques, ou les polypropylene glycol hydroxytéléchéliques. On peut également utiliser un mélange de tels diols. Avantageusement, le diol est choisi parmi le dodecanediol, le decanediol, l'hexane diol, le butanediol, le propanediol, les polybutadiènes hydroxytéléchéliques, les polytetrahydrofurane hydroxytéléchéliques, les polypropylene glycol hydroxytéléchéliques et leurs combinaisons.

Avantageusement la diamine est une alkyle diamine, le terme alkyle englobant les alcènes et les alcynes, plus avantageusement en C4-C36, en particulier en C4-C20. A titre d'exemple, on peut notamment citer la tétraméthylène diamine, l'hexaméthylène diamine, ou la décanediamine, et leurs combinaisons.

Avantageusement, le polymère est obtenu par copolymérisation d'un diacide avec un composé di-fonctionnalisé choisi parmi un diol, une diamine et leurs combinaisons, le diacide est choisi parmi le dimère d'acides gras, l'acide sébacique, l'acide azélaique, l'acide adipique, l'acide glutarique, l'acide succinique, l'acide maléique, l'acide itaconique, et leurs combinaisons, le diol est choisi parmi le dodecanediol, le decanediol, l'hexane diol, le butanediol, le propanediol, les polybutadiènes hydroxytéléchéliques, les polytetrahydrofurane hydroxytéléchéliques, les polypropylene glycol hydroxytéléchéliques et leurs combinaisons, la diamine est choisie parmi la tétraméthylène diamine, l'hexaméthylène diamine, la décanediamine et leurs combinaisons.

Le polyester peut également être obtenu par polymérisation par ouverture de cycle d'une lactone et être fonctionnalisé par un acide carboxylique terminal par condensation avec un polyacide, par exemple un diacide, en excès, ou par ouverture de cycle d'un anhydride cyclique. L'anhydride cyclique peut comprendre de 4 à 10 atomes de carbone cycliques. Les polyamides peuvent également être préparés par polymérisation par ouverture de cycle de lactames, en particulier de lactames comprenant au moins 5 atomes de carbone.

Les polyester-amide peuvent également être obtenus par copolymérisation d'au moins un diacide carboxylique, d'au moins un diol et d'au moins un lactame. Les monomères sont tels que décrits précédemment.

Dans une deuxième variante de l'invention, le polymère thermoplastique est choisi parmi un polyéther, un polyacrylate, un polydiène ou un copolymère de monomères diènes et vinyliques, et leurs combinaisons, tous ces polymères étant en outre fonctionnalisés par une ou plusieurs fonctions acide carboxylique. Ainsi, la fonction acide carboxylique peut être introduite par modification d'un polymère. Avantageusement, le polymère thermoplastique est choisi parmi un polyacrylate, un polydiène ou un copolymère de monomères diènes et vinyliques, et leurs combinaisons.

Le polydiène est avantageusement choisi parmi le polybutadiène, le polyisoprène, les copolymères d'isoprène-butadiène et leurs combinaisons.

Le polyéther est avantageusement choisi parmi le polytétrahydrofurane, le polypropylene glycol, les copolymères bloc d'oxyde éthylène et d'oxyde de propylène et leurs combinaisons.

Les copolymères bloc d'oxyde éthylène et d'oxyde de propylène répondent avantageusement aux formules POE-PPO-POE ou POE-PPO avec POE représentant un bloc d'oxyde d'éthylène et PPO représentant un bloc d'oxyde de propylène.

Le polyéther est avantageusement choisi parmi le polytétrahydrofurane, le polypropylene glycol, et leurs combinaisons.

Le polyacrylate est un polymère ou un copolymère à base d'au moins un des monomères suivants : acide acrylique, acide méthacrylique, et leurs combinaisons. En outre, l'acide (méth)acrylique peut être copolymérisé avec un ou plusieurs esters choisis parmi les esters de l'acide acrylique, les esters de l'acide méthacrylique et leurs combinaisons. Les esters d'acide (méth)acrylique sont avantageusement des esters en C1-C10, avantageusement en C4-C8, par exemple le butyl acrylate et le 2-ethylhexyl acrylate.

La désignation (méth)acrylique désignent les termes acrylique et méthacrylique.

Le polymère peut être fonctionnalisé par un acide carboxylique par toute méthode connue de l'homme du métier.

En particulier, le polymère peut être obtenu par une réaction de condensation ou d'ouverture de cycle, avantageusement choisie parmi :
- la condensation d'un polyéther mono ou dihydroxytéléchélique et d'un polyacide en excès ;
- l'ouverture de cycle d'un anhydride cyclique avec un polyéther mono ou dihydroxytéléchélique ;
- la condensation d'un polydiène mono ou dihydroxytéléchélique et d'un polyacide en excès ;
- l'ouverture de cycle d'un anhydride cyclique avec un polydiène mono ou dihydroxytéléchélique.

Le terme « en excès », signifie que le nombre de mole de polyacide est supérieur au nombre de moles de polyéther, ou de poydiène respectivement, afin que le polymère obtenu comprenne au moins une fonction acide carboxylique.

Le polyacide est avantageusement un diacide, par exemple tel que défini précédemment. L'anhydride cyclique peut comprendre de 4 à 10 atomes de carbone cycliques.

Le polyéther est avantageusement choisi parmi, le polytétrahydrofurane, le polypropylène glycol, les copolymères bloc d'oxyde éthylène et d'oxyde de propylène et leurs combinaisons. Les copolymères bloc d'oxyde éthylène et d'oxyde de propylène sont avantageusement tels que définis précédemment.

Le polydiène est avantageusement choisi parmi le polybutadiène, le polyisoprène, les copolymères d'isoprène-butadiène et leurs combinaisons.

Dans une autre variante, le polymère peut être un polyacrylate obtenu par polymérisation d'au moins un monomère choisi parmi l'acide acrylique, l'acide méthacrylique, et leurs combinaisons. En outre, l'acide (méth)acrylique peut être copolymérisé avec un ou plusieurs esters choisis parmi un ester de l'acide acrylique, un ester de l'acide méthacrylique et leurs combinaisons.

Les esters sont avantageusement tels que définis précédemment.

En particulier, le polymère peut être obtenu par polymérisation de l'acide acrylique ou méthacrylique avec des esters de l'acide acrylique ou méthacrylique. Dans le copolymère obtenu, les unités fonctionnelles issues des esters de l'acide acrylique ou méthacrylique sont avantageusement majoritaires en poids, plus avantageusement constituent plus de 80%, voire plus de 90%, en poids du poids du copolymère.

En particulier, le polyacrylate est choisi parmi un copolymère d'acide (méth)acrylique et de butyl acrylate, un copolymère d'acide (méth)acrylique et de 2-ethylhexyl acrylate, un copolymère d'acide (méth)acrylique, de butyl acrylate et de 2-ethylhexyl acrylate, et leurs combinaisons.

Le copolymère de monomères diènes et vinyliques est avantageusement choisi parmi un copolymère à base au moins des monomères de butadiène et de styrène, un copolymère à base au moins des monomères de butadiène et d'anhydride maléique et leurs combinaisons. En particulier, le polymère est un copolymère à base de monomères de butadiène, de styrène et d'anhydride maléique.

Dans une autre variante, le polymère peut être obtenu par copolymérisation de monomères diène, vinylique et d'anhydride maléique puis modification par ouverture de l'anhydride maléique à l'aide d'un mono-alcool.

Le monomère diène est avantageusement choisi parmi le butadiène, l'isoprène et leurs combinaisons.

Le monomère vinylique est avantageusement le styrène.

En particulier le polymère est obtenu par copolymérisation de monomères butadiène, styrène et d'anhydride maléique puis modification par ouverture de l'anhydride maléique à l'aide d'un mono-alcool.

Le polymère peut comprendre un des polymères décrits précédemment ou une combinaison de plusieurs des polymères décrits précédemment, quelque soient les variantes.

Les composés mentionnés dans la description et les polymères peuvent être d'origine fossile ou biosourcés. Dans ce dernier cas, ils peuvent être, partiellement ou totalement, issus de la biomasse ou obtenus à partir de matières premières renouvelables issues de la biomasse. Le liant peut en outre comprendre un dope d'acide gras traditionnel. Ainsi, dans cette variante, l'émulsion cationique de bitume comprend également un dope d'acide gras.

Le dope d'acide gras traditionnel peut être tout acide gras et dérivés, en particulier des diacides gras, triacides gras, dimère d'acides gras ou trimère d'acides gras, adapté à une utilisation dans un matériau bitumineux.

Par « acide gras » on entend un acide mono-, di- ou tricarboxylique à chaîne aliphatique, saturée ou insaturée, contenant 10 à 28 atomes de carbone, avantageusement 12 à 20 atomes de carbone.

Les acides gras peuvent être d'origines fossiles, animales, végétales ou de synthèse. Ils peuvent avoir subi une fonctionnalisation chimique. Par origine animale on entend par exemple le suif. Par origine végétale on entend les huiles végétales, celles-ci sont avantageusement choisies parmi les huiles de tournesol, de soja, de colza, de lin, de coprah, d'arachide, d'olive, de maïs, de ricin, leurs dérivés ainsi que leurs combinaisons. Ces matières grasses peuvent également provenir d'huiles usagées de l'industrie (agroalimentaire, papeterie, ...).

Par « dérivés d'acides gras », on entend par exemple les acides gras polymérisés ou des diacides ou triacide d'acides gras. Les acides gras polymérisés comprennent des monomères d'acides gras, des dimères d'acides gras et des trimères d'acides gras. Par diacide ou triacide d'acides gras, on entend tout acide gras fonctionnalisé par une nouvelle fonction acide carboxylique sur au moins une des insaturations de sa chaîne hydrocarbonée, ladite fonction ayant réagi avec une autre fonction acide carboxylique d'un autre acide gras ou, respectivement, diacide gras.

La masse moléculaire des dérivés d'acides gras sera comprise préférentiellement entre 600 et 800 g/mol.

Avantageusement, le dope d'acide gras a un indice d'acide supérieur à 100, plus avantageusement supérieur à 150, encore plus avantageusement supérieur à 180.

L'indice d'acide du dope représente la quantité d'acide libre et est le nombre de milligrammes de potasse nécessaire pour neutraliser l'acidité de 1 gramme de produit, déterminé par potentiométrie.

Les acides gras peuvent être fonctionnalisés chimiquement et ainsi porter au moins une fonction chimique choisie parmi les fonctions alcool, ester, époxy, peroxyde, acide carboxylique et aldéhyde, avantageusement une fonction acide carboxylique.

Les acides gras sont avantageusement non saturés, et comprennent avantageusement au moins deux doubles liaisons carbone-carbone conjuguées. L'une ou l'autre de ces doubles liaisons peut avoir subi le greffage de molécules d'anhydride maléique (conduisant à la formation de fonctions diacides carboxyliques sur la chaîne hydrocarbonée). Cette fonctionnalisation permet l'obtention de diacides ou de triacides reliant les acides gras par des ponts oxygène formés sur leurs chaînes hydrocarbonées.

De préférence, l'acide gras est choisi dans le groupe constitué de l'acide oléique, de l'acide linoléique, et leurs combinaisons. Ces acides gras proviennent avantageusement d'huile(s) végétale(s) ou d'huiles usagées de l'industrie.

Le dope d'acide gras peut être ajouté au liant bitumineux en mélange avec les polymères ajoutés au liant ou en ligne.

La teneur en dope d'acide gras varie avantageusement de 0,1% à 2 % en poids, par rapport au poids du liant, plus avantageusement de 0,2 à 1% en poids. Dans d'autres variantes la teneur en dope d'acide gras peut être de 0% en poids.

### Emulsifiants

L'émulsion de bitume est une dispersion du liant dans l'eau, phase continue du système. Elle comprend une composition émulsifiante comprenant au moins un émulsifiant cationique.

La teneur en composition émulsifiante varie avantageusement de 0,1 à 2% en poids, par rapport au poids total de l'émulsion, plus avantageusement de 0,13 à 1,2% en poids. La teneur en composition émulsifiante varie avantageusement de 1 à 20 kg par tonne d'émulsion, plus avantageusement de 1,3 à 12 kg par tonne d'émulsion.

Dans un mode de réalisation avantageux, la composition émulsifiante comprend principalement au moins une amine. Par « principalement » on entend, au sens de la présente invention, que la composition émulsifiante comprend au moins 50% en poids, avantageusement au moins 80% en poids, jusqu'à 100% en poids, d'une amine par rapport au poids total des émulsifiants. En particulier, l'amine peut être choisie parmi :
- les alkylpropylènepolyamines ;
- les amines grasses ;
- les alkyles diamines ;
- les amidopolyamines ;
- les ammoniums quaternaires à chaîne grasse ;
- et leurs combinaisons.

Dans les alkylpropylènepolyamines ou les alkyldiamines, le groupe alkyle est avantageusement un radical hydrocarboné, saturé ou insaturé, comprenant de 8 à 24 atomes de carbone, plus avantageusement 12 à 22 atomes de carbone, et/ou ses dérivés immédiats de cyclisation ainsi que ses dérivés oxyéthylés ou oxypropylés.

Les alkylpropylènepolyamines répondent avantageusement à la formule (V) R₁₀-(NR₁₄-R₁₃)ₓ-NR₁₁R₁₂ dans laquelle :
- x est un entier allant de 1 à 4. Avantageusement x vaut 1 ;
- R₁₀ représente un radical hydrocarboné comprenant de 8 à 24 atomes de carbone, plus avantageusement 12 à 22 atomes de carbone, saturé ou insaturé, linéaire ou ramifié, éventuellement cyclisé. Ce radical dérive avantageusement d'acides gras de suif ;
- R₁₃ représente un radical hydrocarboné comprenant de 1 à 6 atomes de carbone, saturé ou insaturé, linéaire ou ramifié. Avantageusement R₁₃ représente un radical éthylène ou propylène ;
- R₁₄ représente un atome d'hydrogène, un radical hydrocarboné comprenant de 1 à 6 atomes de carbone, saturé ou insaturé, linéaire ou ramifié, ou un radical (CH₂-CR₁₅HO)_{z}H dans lequel R₁₅ est un atome d'hydrogène ou un radical méthyle, z vaut 1 ou 2. Avantageusement R₁₄ représente un radical méthyle ou éthyle ;
- Ru et R₁₂ représentent, chacun, indépendamment l'un de l'autre, un atome d'hydrogène, un radical hydrocarboné comprenant de 1 à 6 atomes de carbone, saturé ou insaturé, linéaire ou ramifié ou un radical (CH₂-CR₁₅HO)_{z}H dans lequel R₁₅ est un atome d'hydrogène ou un radical méthyle, z vaut 1 ou 2. Avantageusement R₁₁ représente un radical méthyle ou éthyle. Avantageusement R₁₂ représente un radical méthyle ou éthyle. A titre d'exemple, on peut citer la suif trimèthylpropylène diamine.

Les amines grasses répondent avantageusement à la formule (VI) R₁₀-NR₁₁R_{12;} R₁₀, R₁₁ et R₁₂ étant tels que définis précédemment. A titre d'exemple, on peut citer la suif diméthylamine.

Les alkyldiamines répondent avantageusement à la formule (VII) NR₁₁'R₁₂'-R₁₀-NR₁₁R_{12 ;} R₁₀, R₁₁ et R₁₂ étant tels que définis précédemment. R₁₁' et R₁₂' représentent, chacun, indépendamment l'un de l'autre, un atome d'hydrogène, un radical hydrocarboné comprenant de 1 à 6 atomes de carbone, saturé ou insaturé, linéaire ou ramifié ou un radical (CH₂-CR₁₅HO)_{z}H dans lequel R₁₅ est un atome d'hydrogène ou un radical méthyle, z vaut 1 ou 2.

Les amidopolyamines répondent avantageusement à la formule (VIII) R₁₀'CO-(NH-R_{10"})ₐ-NH₂, dans laquelle :
- R₁₀' est un reste hydrocarboné, saturé ou insaturé, linaire ou ramifié comprenant de 12 à 24 atomes de carbone, avantageusement 16 à 24 atomes de carbone. Ce radical dérive avantageusement d'acides gras de tall oil (huile de tall) ou de suif ;
- R₁₀" est un radical éthylène ;
- a représente un entier allant de 2 à 5, de préférence a vaut 5 ; et/ou ses dérivés immédiat de cyclisation, en particulier les dérivés imidazoline.

L'amidopolyamine est avantageusement le ou les produits de réaction d'un acide gras tel que le Tall Oil ou la suif avec la diéthanolamine, et/ou diéthylènetriamine, et/ou la tétraéthylènpentamine et/ou la triéthylènetétramine.

Les ammoniums quaternaires peuvent en particulier être de formule (IX) (Rx)ₐN⁺(Ry)_{b}Y⁻dans laquelle :
- Rx représente un radical hydrocarboné comprenant de 8 à 24 atomes de carbone, plus avantageusement 12 à 22 atomes de carbone, saturé ou insaturé, linéaire ou ramifié, éventuellement cyclisé ;
- Ry représente un radical alkyle comprenant de 1 à 6 atomes de carbone, éventuellement hydroxylé, notamment méthyle, éthyle, propyle, hydroxyéthyle, hydroxypropyle ;
- Y⁻ désigne un anion d'un acide minéral, en particulier un anion chlorure, ou d'un acide organique, notamment un anion acétate ou formiate ;
- b est un nombre entier égal à (4-a) et a pouvant prendre les valeurs de 1, 2 ou 3,

Dans une variante de l'invention, la composition émulsifiante comprend au moins une alkylpropylènepolyamine et au moins une amidopolyamine. Dans cette variante, la composition émulsifiante peut en outre comprendre une amine grasse.

Parmi les tensioactifs pertinents pour cette application on peut citer les produits commerciaux suivants :
- Dinoram^{®}S (Ceca) ou Redicote^{®}E9 (Akzo Nobel) : N alkyl suif propylène diamine
- Emulsamine^{®}L 60 (Ceca) : Préparation à base d'amide gras de tallol, N-(3-dimethylamino)propyles (> 50 %) et Emulsamine^{®}LZ (> 25 %) avec un hydrocarbure aromatique (> 1 %) et du diéthanolamine (> 1 %)
- Polyram^{®}S (Ceca): N-alkyl suif propylène polyamine avec Dinoram^{®}S (< 10 %), amines alkyl de suif (Noram^{®}S - < 5 %), nitrile de suif (< 10 %)
- Stabiram^{®}MS 601 (Ceca) : solution de dichlorure de N-alkyl suif N-diméthyl amino propyl N-triméthyl ammonium (> 50 %) dans un mélange eau/hexylène glycol (glycol > 20 %) avec Dinoram^{®}S (< 1 %)
- Dinoram^{®}O (Ceca) : N-(C16 et C18 alkyl insaturés) triméthylène diamine (diamine oléique)
- Emulsamine^{®}640 (Ceca) : Préparation à base d'amides gras de tallol (> 50 %), de Dinoram^{®}O (> 25 %) et de (Z)-octadec-9-enylamine (> 1 %)
- Indulin^{®}R 66 (Meadwestvaco) : Amides gras de tallol : N - [(diméthylamino)-3-propyl]
- Indulin^{®}R 33 (Meadwestvaco) : Amides gras de tallol (N-[(diméthylamino)-3-propyl]) (75-90 %), N-tallow alkyltrimethylenediamine (20-25%)
- Indulin^{®}GE F2 (Meadwestvaco) : Éthoxylate de nonylphénol (25-35 %), lignine alcalin (réaction produite avec diméthylamine et formaldéhyde) (15-20%), N-(alkyl en C14-18 et insaturés en C16-18)-triméthylènediamine (5-10%)
- Indulin^{®}GE F2 (Meadwestvaco) : alccols ethoxylés en C12-C14 (2,5-25 %), lignine alcalin (réaction produite avec diméthylamine et formaldéhyde) (10-20%), N-(alkyl en C14-18 et insaturés en C16-18)-triméthylènediamine (1-3%)
- Duomeen^{®}TTM (Akzo Nobel) : suiftriméthylpropylènediamine (90-100%), suifdiméthylamine (5-10%)
- Redicote^{®}404 (Akzo Nobel) : tallol, produits de réaction avec la tétraéthylènepentamine (100%)

On pourra utiliser un ou plusieurs de ces tensioactifs, seuls ou en mélanges. La composition émulsifiante pourra également comprendre un agent émulsifiant non ionique. Cet agent pourra être choisi dans la famille des alcools gras éthoxylés, la partie hydrophobe de la molécule pouvant être de type nonylphénol-, octylphénol-, cétytique, oléique, etc., la partie hydrophile étant constituée de plusieurs groupes éthoxy.

### Acide

La phase aqueuse de la composition émulsifiante comprend également une quantité suffisante d'un acide minéral ou organique (par exemple : acide citrique, acide acétique), avantageusement un acide minéral. L'acide permet d'ioniser les fonctions cationiques, en particulier amines, des émulsifiants pour permettre leur dissolution dans l'eau.

La teneur en acide est ajustée à la teneur en émulsifiant (en fonction de la nature des granulats, de la température d'application...) pour avoir un pH de la phase aqueuse compris entre 1,5 et 8, avantageusement entre 1,5 et 7, plus avantageusement entre 1,5 et 5,5, encore plus avantageusement entre 2 et 3,5.

L'acide est avantageusement l'acide chlorhydrique, l'acide phosphorique ou un acide polyphosphorique. L'acide polyphosphorique est un oligomère d'acide phosphorique comprenant des molécules selon l'une ou l'autre des formules structurelles PₙO₃ₙ₊₁⁽ⁿ⁺²⁾⁻ dans laquelle n est un nombre entier supérieur ou égal à 1, avantageusement 1, 2 ou 3, ou P₂O₅ x(O²⁻), dans laquelle x est compris entre 0 et 1.

Dans la variante de l'invention, dans laquelle la composition émulsifiante comprend au moins une alkylpropylènepolyamine et au moins une amidopolyamine, l'acide est avantageusement l'acide phosphorique ou un acide polyphosphorique.

### Autres

L'émulsion pourra contenir du latex synthétique ou naturel. Par latex on entend une dispersion de polymères (SBS, SB) réticulés ou non en phase aqueuse. Ce latex est incorporé dans la phase aqueuse avant émulsification ou en ligne pendant la fabrication de l'émulsion soit encore après fabrication de l'émulsion.

On peut également ajouter des fluxants d'origine pétrolière ou issus des agroressources. Ces fluxants peuvent être ajoutés durant la fabrication de l'émulsion ou lors de la fabrication des enrobés à l'émulsion.

L'agent fluxant est avantageusement un fluxant d'origine pétrolière ou pétrochimique. Un fluxant pétrolier est un produit issu de la distillation du pétrole brut (fraction(s) légère(s)), ayant pu subir éventuellement une opération d'hydrotraitement. En particulier, l'agent fluxant est choisi dans le groupe constitué par les agents fluxants commercialisés par Total (Greenflux^{®} 2000^{®}, Greenflux SD) ou par Exxon (Varsol^{®}).

L'agent fluxant est avantageusement un fluxant constitué d'esters dibasiques. En particulier, l'agent fluxant est commercialisé par Solvay (InnRoad Protect^{®}).

L'agent fluxant est avantageusement un fluxant d'origine naturelle non fossile (origine végétale ou animale). Un fluxant d'origine naturelle non fossile est constitué d'une huile naturelle non fossile, de ses dérivés tels que les esters d'acide gras et de leurs combinaisons. Ces agents fluxants d'origine naturelle non fossile sont bien connus de l'homme du métier. Préférentiellement, on utilisera les huiles végétales telles que les huiles de tournesol, de colza, d'arachide, de coprah, de lin, de palme, de soja, d'olive, de ricin, de maïs, de courge, de pépins de raisin, de jojoba, de sésame, de noix, de noisette, de bois de chine, le tall oil, leurs dérivés, ainsi que leurs combinaisons.

En particulier, le fluxant d'origine naturelle non fossile est choisi dans le groupe constitué par :
- des acides, des esters, en particulier des monoesters dont les monoesters méthyliques, ou des amides, éventuellement fonctionnalisés par oxydation, obtenus à partir d'huiles végétales ou animales (huile de pin, de tournesol, de colza, de lin, de ricin, d'arachide, de coprah, d'olive, de palme, de coton, de maïs, de suif, de saindoux, de palmiste, de soja, de courge, de pépins de raisin, d'atgan, de jojoba, de sésame, de noix, de noisette, de bois de chine, de riz - tels que décrits dans les demandes FR 2 786 603, FR 2 910 477, EP 900 822, FR 2 721 043 ou FR 2 891 838), et leurs combinaisons ;
- les huiles lourdes d'origine minérale, les huiles et graisses animales et végétales, et leurs dérivés fonctionnalisés avec des produits de transestérification et des produits de saponification et leurs combinaisons, les mono-, di- ou triacides carboxyliques organiques, saturés ou insaturés, ayant de 6 à 24 atomes de carbone pouvant être ramifiés (tels que décrits dans la demande AT 406 375) ; et leurs combinaisons.

Un additif de siccativation, tel que l'octoate de manganèse, pourra être ajouté à ces huiles et dérivés afin de favoriser les réactions d'oxydation.

### Fraction solide

L'émulsion ainsi décrite est mélangée avec une fraction solide, notamment d'une fraction solide minérale, pour conduire à matériau bitumineux coulé à froid.

Par "fraction solide ", en particulier « fractions solides minérales », on entend ici toutes fraction solide utilisable pour la réalisation de matériaux bitumineux coulés à froid notamment pour la construction routière, tels que par exemple définis dans la norme NF EN 13043 (août 2003). La fraction solide utilisable pour la réalisation de matériaux bitumineux coulés à froid inclut notamment une fraction solide minérale comprenant les granulats minéraux naturels (gravillons, sable, fines) par exemple issus de carrière ou de gravière, les produits de recyclage tel que les agrégats d'enrobés, par exemple résultant du recyclage des matériaux récupérés lors de la réfection des routes ainsi que des surplus de centrales d'enrobage, les rebuts de fabrication, les « shingles » (provenant du recyclage des membranes de toitures), les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, les granulats artificiels de toute origine et les granulats provenant par exemple de mâchefers d'incinération des ordures ménagères (MIOM), ainsi que leurs combinaisons en toutes proportions.

La fraction solide, en particulier la fraction solide minérale, par exemples les granulats minéraux naturels, comprend typiquement :
- des éléments inférieurs à 0,063 mm (filler ou fines) ;
- du sable dont les éléments sont compris entre 0,063 mm et 2 mm ;
- des gravillons, dont les éléments ont des dimensions
   ○ comprises entre 2 mm et 6 mm ;
   ○ supérieures à 6 mm.

La taille des éléments de la fraction solide, en particulier la fraction solide minérale, par exemple les granulats minéraux est mesurée par les essais décrits dans la norme NF EN 933-1 (2012-05-01).

On entend par « agrégats d'enrobés » des enrobés (mélange de granulats et de liants bitumineux) provenant de fraisage de couches d'enrobé, de concassage de plaques extraites de chaussées en enrobées, de morceaux de plaques d'enrobés, de déchets d'enrobé ou de surplus de productions d'enrobés (les surplus de productions sont des matériaux enrobés ou partiellement enrobés en centrale résultant des phases transitoires de fabrication) (norme NF EN13108-8 (2016-10-21)). Ces éléments et les autres produits de recyclage seront concassés et/ou tamisés pour ne pas excéder un diamètre de 10mm.

On désigne également la « fraction solide » par les termes « fraction solide 0/D ».

On désigne également la « fraction solide minérale » par les termes « fraction minérale 0/D ».

Cette fraction solide 0/D peut être séparée en deux granulométries : la fraction solide 0/d et la fraction solide d/D.

Cette fraction minérale 0/D peut être séparée en deux granulométries : la fraction minérale 0/d et la fraction minérale d/D.

Les éléments les plus fins (la fraction solide 0/d, avantageusement la fraction minérale 0/d) seront ceux compris dans la plage comprise entre 0 et un diamètre maximal que l'on peut fixer entre 2 et 6 mm (de 0/2 à 0/6), avantageusement entre 2 et 4 mm. Les autres éléments (diamètre minimal supérieur à 2, 3, 4, 5 ou 6 mm ; et environ jusqu'à 10 mm) constituent la fraction solide d/D, avantageusement la fraction minérale d/D.

Généralement on utilise des granulométries 0/4, 0/6, 0/6 discontinu, 0/8, 0/8 discontinu ou 0/10 recomposées, avec éventuellement humidification pour éviter la ségrégation lors du transport. La fraction solide, notamment la fraction solide minérale comprend avantageusement de 6 à 10 % en poids de fines, par rapport au poids total de la fraction solide.

La fraction solide, notamment la fraction solide minérale, constitue avantageusement 80 à 95 %, plus avantageusement 85 à 95 %, du poids du matériau bitumineux coulé à froid.

On peut ajouter à la fraction solide, notamment la fraction solide minérale, un additif minéral pour réguler la cinétique de remontée de pH lors du mélange et améliorer le temps de maniabilité et améliorer ensuite la qualité de rupture de l'émulsion et améliorer les propriétés d'adhésivité. Cet additif peut être du ciment, de la chaux, du lait de chaux calcique, un lait calco-magnésien.

On entend par « ciment » tout liant hydraulique composé de matière inorganique finement moulue qui, gâchée avec de l'eau, forme une pâte qui fait prise et durcit par suite de réactions et processus d'hydratation et qui après durcissement, conserve sa résistance et sa stabilité même sous l'eau (normes NF P98-149 (2000-06-01)).

On entend par « lait calco-magnésien », une suspension aqueuse de particules solides d'un composé calco-magnésien. Des laits calco-magnésiens sont plus largement défini dans la demande WO 2016/005591.

La teneur en additif minéral varie avantageusement de 0,05 à 1 ppc, en poids par rapport au poids de la fraction solide sèche, notamment la fraction solide minérale sèche.

On peut également ajouter à la fraction solide, notamment la fraction solide minérale des fibres, avantageusement des fibres organiques et en particulier les polyacrylonitriles, telles que les fibres en polyacrylonitrile de taille comprise entre 4 et 12 mm. La teneur en fibre varie avantageusement de 0,05 à 0,5 ppc (partie pour cent en poids) / fraction solide sèche, avantageusement 0,05 à 0,5 ppc (partie pour cent en poids) / granulats secs, préférentiellement entre 0,07 et 0,2 ppc.

Dans le matériau bitumineux, la teneur en liant résiduel est avantageusement comprise entre 5 et 12%, plus avantageusement de 6 à 10%, en poids par rapport au poids total de la fraction solide sèche, notamment la fraction solide minérale sèche.

### Utilisation du matériau bitumineux selon l'invention

Ces matériaux bitumineux coulés à froid sont particulièrement adaptés pour la fabrication de couches de roulement, à faible ou fort trafic, en travaux neufs comme en entretien, de couche d'accrochage ou de couche de roulement provisoire.

La présente invention a également pour objet l'utilisation du matériau bitumineux selon l'invention, pour la fabrication de couches de roulement, de couche d'accrochage ou de couche de roulement provisoire.

En tant que techniques d'entretien, les matériaux bitumineux coulés à froid apportent aux chaussées imperméabilité et adhérence. Compte tenu de leur faible épaisseur, ils ne permettent pas de compenser des faiblesses de structure. Leur domaine d'emploi de prédilection est l'entretien préventif et curatif.

La modulation de la granulométrie, la possibilité d'employer des liants modifiés, l'application en monocouche ou en bicouche permettent d'adopter la technique aux trafics et aux supports.

Les domaines d'emploi plus spécifiques concernent de manière non limitative les applications suivantes :
1. Les enrobés coulés à froid haute performance pour autoroutes (trafic jusqu'à T0).
2. Les enrobés coulés à froid pour le traitement des zones accidentogènes.
3. Les enrobés coulés à froid pour complexes retardateurs de remontée de fissures (attention, l'effet anti fissure sera limité du fait de leur épaisseur).
4. Les revêtements composés du type Capeseal (Enduit+ Enrobé Coulé à Froid).
5. Les enrobés coulés à froid pour couche d'accrochage.
6. Les enrobés coulés à froid colorés.
7. L'entretien des chaussées aéronautiques, voies de taxi, zones de stationnement des avions privés...
8. Le colmatage des enrobés drainants.

### Procédé de préparation d'un matériau bitumineux

L'invention a également pour objet un procédé de préparation d'un matériau bitumineux coulé à froid ayant des propriétés de montée en cohésion améliorées, comprenant :
a. La préparation d'une fraction solide, notamment d'une fraction solide minérale.
b. Avantageusement, l'ajout, à la fraction solide de l'étape a), d'un additif minéral.
c. Le cas échéant, l'ajout à la fraction solide de l'étape b), d'eau d'apport et/ou d'un additif retardateur de prise.
d. L'ajout de l'émulsion de bitume telle que décrite précédemment à la fraction solide de l'étape a) ou b) ou c).

A la fraction solide, notamment la fraction solide minérale, on ajoute avantageusement (étape b), un additif minéral tel que décrit ci-dessus. On peut également ajouter des fibres, tel que décrit ci-dessus. Avantageusement, on ajoute en outre des fibres, en particulier des polyacrylonitriles, lors de l'étape b).

En fonction des conditions climatiques, de l'état de sécheresse de la fraction solide, notamment la fraction solide minérale, l'opérateur peut ajouter à la fraction solide, notamment la fraction solide minérale, de l'eau d'apport.

En règle générale la teneur en poids totale en eau de la fraction solide, notamment la fraction solide minérale, constituée de l'eau d'apport et de l'eau naturellement présente dans la fraction solide, est d'environ 10 %. Elle peut varier de 6 à 14 % voire plus. Les pourcentages sont exprimés en poids par rapport au poids total de la fraction solide.

L'opérateur peut ajouter également un dope (solution diluée d'un émulsifiant dans de l'eau), qui servira principalement de retardateur de prise. Ces émulsifiants peuvent être des amines grasses mais aussi des ammoniums quaternaires.

En particulier, l'amélioration de la montée en cohésion dudit matériau bitumineux coulé à froid consiste à obtenir les spécifications suivantes :
- Une valeur de cohésion torsion, mesurée selon l'essai cohésion Bénédict décrit ci-dessus, supérieure ou égale à 20 kg/cm à 30 min. Avantageusement, lorsque l'on observe de l'état de l'éprouvette à la fin du test de cohésion Benedict, celle-ci est soit normale soit solide.
- Un temps de fracture, mesuré selon la méthode décrite ci-dessus, au moins aussi bon que celui obtenu avec un bitume naphténique.
- une perte de masse, mesurée selon l'essai WTAT décrit ci-dessus après un temps de mûrissement de 18 h à 18°C et un degré d'hygrométrie de 55 %, inférieure à 5 %.
- une perte de masse, mesurée selon l'essai WTAT décrit ci-dessus après un temps de mûrissement de 18 h à 18°C et un degré d'hygrométrie de 100 %, inférieure à 25 %.

Ces spécifications ne sont pas obtenues au détriment des temps de maniabilité, de rupture ni au détriment des propriétés mécaniques.

L'invention a également pour objet un procédé de fabrication de couche de roulement ou couche d'accrochage comprenant
- la préparation d'un matériau bitumineux coulé à froid selon l'invention ; puis
- l'épandage du matériau bitumineux à une température ambiante variant de 5°C à 40°C et à un degré d'hygrométrie pouvant aller jusqu'à 100 % ;
- puis remise sous trafic, avantageusement dans l'heure, plus avantageusement dans la demi-heure, après l'épandage.

L'enrobé pourra être compact pour des conditions difficiles de mise en oeuvre (zones ombragées, température supérieure à 5°C).

Selon ce procédé la remise sous trafic se fait avantageusement dans l'heure, plus avantageusement dans la demi-heure, après l'épandage/compactage.

L'invention a également pour objet l'utilisation combinée dans un matériau bitumineux coulé à froid (a) d'une émulsion cationique de bitume, en particulier comprenant la composition émulsifiante selon l'invention, (b) d'un additif polymère thermoplastique selon l'invention, (c) éventuellement d'un dope d'acide gras tel que défini précédemment, (d) et avantageusement d'additif minéral ajouté à la fraction solide, notamment la fraction solide minérale, pour améliorer la montée en cohésion dudit matériau bitumineux coulé à froid.

En particulier, l'amélioration de la montée en cohésion dudit matériau bitumineux coulé à froid consiste à obtenir les spécifications suivantes :
- Une valeur de cohésion torsion, mesurée selon l'essai cohésion Bénédict décrit ci-dessus, supérieure ou égale à 20 kg/cm à 30 min. Avantageusement, lorsque l'on observe de l'état de l'éprouvette à la fin du test de cohésion Benedict, celle-ci est soit normale soit solide.
- Un temps de fracture, mesuré selon la méthode décrite ci-dessus, au moins aussi bon que celui obtenu avec un bitume naphténique.
- une perte de masse, mesurée selon l'essai WTAT décrit ci-dessus après un temps de mûrissement de 18 h à 18°C et un degré d'hygrométrie de 55 %, inférieure à 5 %.
- une perte de masse, mesurée selon l'essai WTAT décrit ci-dessus après un temps de mûrissement de 18 h à 18°C et un degré d'hygrométrie de 100 %, inférieure à 25 %.

Ces spécifications ne sont pas obtenues au détriment des temps de maniabilité, de rupture ni au détriment des propriétés mécaniques.

Les exemples qui suivent illustrent l'invention mais ne sont pas limitatifs.

Exemple 1 : Formulations des émulsions cationiques de bitume Les émulsions suivantes ont été formulées, avec un bitume paraffinique de grade 50/70 (fournisseur : Esso).

Les formules F1 et F2 comprennent chacune un additif. La formule F1 comprend un additif de l'art antérieur qui est un acide gras (exemple de référence). La formule F2 comprend un additif selon l'invention.

Les formules F1 et F2 sont reportées dans le tableau suivant dans lequel les teneurs en additifs dans le bitume sont toutes exprimées en % de la phase bitumineuse et les teneurs des autres composants sont exprimées en kg/t d'émulsion :

**[table 1]**

| | | F1 | F2 |
|---|---|---|---|
| Phase bitumineuse (teneur = 600kg/t) | | | |
| Additif | Nature | Indulin FD | Nouracid CE 80 |
| | Fournisseur | Ingevity | Oleon |
| | Teneur | 0.6% | 1.2% |

| Phase aqueuse (teneur = 400 kg/t) | | | |
|---|---|---|---|
| Emulsifiant 1 | Nature | Polyram L980 | Polyram L980 |
| | Fournisseur | Arkema | Arkema |
| | Teneur | 8 | 8 |
| Acide Eau | Nature | H3PO4 | H3PO4 |
| | Teneur | 8 | 8 |
| | Teneur | 384 | 384 |

| | | | |
|---|---|---|---|
| Nouracid CE80 = poly(acide ricinoléïque) ayant un indice d'acide de 50 mgKOH/g. Ce produit est commercialisé par la société Oléon sous la dénomination Nouracid CE 80, n°CAS : 68604-47-7 Indulin FD = acide gras de tall oil comprenant un mélange d'acides gras en C18 :0, C18 : 1, C18 :2 Polyram L980 : émulsifiant comprenant des dérivés d'alkyle diamines (n° CAS : 1290049-56-7), des imidazolines (n°CAS : 1226892-44-9), des amines, polyéthylènepoly-, triéthylènetétramine fraction (n°CAS : 90640-67-8), des éthylène amines (n°CAS : 112-24-3), des dérivés d'alkylamines (n°CAS : 1218787-32-6), commercialisé par la société Arkema. | | | |

Les émulsions F1 et F2 sont mélangées avec des granulats (carrière Mazières) et formulées tel que reporté dans le tableau suivant, dans lequel les teneurs sont toutes exprimées en ppc/granulats secs :

**[Table 2]**

| Référence Emulsion | F1 | F2 |
|---|---|---|
| Teneur en eau | 9 | 9 |
| Emulsion | 11,3 | 11,3 |
| Ciment CEM II 32.5 | 0,5 | 0,5 |
| tm (s) | 100 | 100 |
| tr (min) | 7 | 7 |
| Temps de fracture en pourcentage relatif | 100% | 300% |
| WTAT 18°C 100% HR (%) | 5 | 3 |

| | | |
|---|---|---|
| tm = temps de malaxage ; tr = temps de rupture ; tf = temps de fracture éprouvette en relatif Dans le tableau précédent, la teneur en eau correspond à la teneur en eau des granulats + la teneur en eau d'apport. | | |

L'utilisation d'un additif selon l'invention permet d'améliorer la montée en cohésion du MBCF (vue notamment au travers du temp de fracture).

On constate que la formule selon l'invention (émulsion F2) possède une meilleure remontée en cohésion que la formule de référence (émulsion F1) contenant un additif qui n'est pas celui de l'invention.

## Revendications

1. Matériau bitumineux coulé à froid, obtenu par mélange d'une fraction solide, notamment d'une fraction solide minérale, avec une émulsion cationique de bitume, ladite émulsion cationique de bitume comprenant de l'eau, un liant hydrocarboné, au moins un émulsifiant et un acide, dans laquelle le liant hydrocarboné comprend du bitume et un additif, **caractérisé en ce que** le liant hydrocarboné comprend de 0,02% à 10% en poids dudit additif par rapport au poids du liant, et **en ce que** ledit additif est un polymère thermoplastique compatible avec le bitume, ayant au moins une fonction acide carboxylique, le polymère étant choisi parmi un polyester, un polyamide, un poly(ester-amide), un polyéther, un polyacrylate, un polydiène, ou un copolymère de monomères diènes et vinyliques, et leurs combinaisons.

2. Matériau selon la revendication 1, **caractérisé en ce que** le polymère thermoplastique répond à l'une ou plusieurs des caractéristiques suivantes :
- le polymère thermoplastique a un indice d'acide inférieur à 200 mgKOH/g, avantageusement inférieur à 80mgKOH/g ;
- le polymère thermoplastique a une masse moléculaire en poids d'au moins 500 g/mol, avantageusement de 500 g/mol à 50 000 g/mol, plus avantageusement de 500g/mol à 5 000g/mol.

3. Matériau bitumineux coulé à froid selon l'une quelconque des revendications précédentes, **caractérisé en ce que** le polymère est obtenu par polymérisation d'au moins un hydroxyacide de formule (I) :
HO-C(O)-R-CR'(OH)-R" (I)
où
- R est une chaîne hydrocarbonée, aliphatique, en C8-C20, saturée ou insaturée, éventuellement ramifiée, comprenant éventuellement un ou des atomes d'oxygène, comprenant une chaîne principale linéaire d'au moins 8 atomes de carbone ; et
- R', R" représentent chacun, indépendamment l'un de l'autre, H ou une chaîne hydrocarbonée, aliphatique, en C1-C10 ;
éventuellement en présence d'au moins un diacide carboxylique de formule (III) :
HO-C(O)-R2-C(O)-OH (III)
où
- R2 est une chaîne hydrocarbonée aliphatique en C1-C60, saturée ou insaturée, éventuellement ramifiée, comprenant éventuellement un ou des atomes d'oxygène, ou un groupement aromatique.

4. Matériau bitumineux coulé à froid selon l'une quelconque des revendications 1 à 3, **caractérisé en ce que** le polymère est choisi parmi le poly(acide ricinoléique), le poly(acide12-hydroxystérique) et leurs combinaisons.

5. Matériau bitumineux coulé à froid selon l'une quelconque des revendications 1 à 2, **caractérisé en ce que** le polymère est obtenu par copolymérisation d'un diacide avec un composé di-fonctionnalisé choisi parmi un diol, une diamine et leurs combinaisons, le diacide est choisi parmi le dimère d'acides gras, l'acide sébacique, l'acide azélaique, l'acide adipique, l'acide glutarique, l'acide succinique, l'acide maléique, l'acide itaconique, et leurs combinaisons, le diol est choisi parmi le dodecanediol, le decanediol, l'hexane diol, le butanediol, le propanediol, les polybutadiènes hydroxytéléchéliques, les polytetrahydrofurane hydroxytéléchéliques, les polypropylene glycol hydroxytéléchéliques et leurs combinaisons, la diamine est choisie parmi la tétraméthylène diamine, l'hexaméthylène diamine, la décanediamine et leurs combinaisons.

6. Matériau bitumineux coulé à froid selon l'une quelconque des revendications 1 à 2, **caractérisé en ce que** le polymère est obtenu par une réaction de condensation ou d'ouverture de cycle choisie parmi :
- la condensation d'un polyéther mono ou dihydroxytéléchélique et d'un polyacide en excès ;
- l'ouverture de cycle d'un anhydride cyclique avec un polyéther mono ou dihydroxytéléchélique ;
- la condensation d'un polydiène mono ou dihydroxytéléchélique et d'un polyacide en excès ;
- l'ouverture de cycle d'un anhydride cyclique avec un polydiène mono ou dihydroxytéléchélique ;
le polyéther est avantageusement choisi parmi, le polytétrahydrofurane, le polypropylène glycol, et leurs combinaisons ; le polydiène est avantageusement choisi parmi le polybutadiène, le polyisoprène, les copolymères d'isoprène-butadiène et leurs combinaisons.

7. Matériau bitumineux coulé à froid selon l'une quelconque des revendications 1 à 2, **caractérisé en ce que** le polymère est un polyacrylate obtenu par polymérisation de l'acide acrylique ou méthacrylique avec des esters de l'acide acrylique ou méthacrylique, en particulier le polymère est un polyacrylate choisi parmi un copolymère d'acide (méth)acrylique et de butyl acrylate, un copolymère d'acide (méth)acrylique et de 2-ethylhexyl acrylate, un copolymère d'acide (méth)acrylique, de butyl acrylate et de 2-ethylhexyl acrylate, et leurs combinaisons.

8. Matériau bitumineux coulé à froid selon l'une quelconque des revendications 1 à 2, caractérisé en ce le polymère est obtenu par copolymérisation de monomères diènes et vinyliques et d'anhydride maléique, en particulier le polymère est un copolymère à base de monomères de butadiène, de styrène et d'anhydride maléique, puis modification par ouverture de l'anhydride maléique à l'aide d'un mono-alcool.

9. Matériau bitumineux coulé à froid selon l'une quelconque des revendications précédentes, **caractérisé en ce que** la fraction solide, notamment la fraction solide minérale comprend un additif minéral.

10. Utilisation du matériau bitumineux coulé à froid selon l'une quelconque des revendications précédentes, pour la fabrication de couches de roulement, de couche d'accrochage ou de couche de roulement provisoire.

11. Procédé de préparation d'un matériau bitumineux coulé à froid ayant des propriétés de montée en cohésion améliorées, comprenant :
a. La préparation d'une fraction solide, notamment d'une fraction solide minérale,
b. Avantageusement l'ajout, à la fraction solide de l'étape a) ; d'un additif minéral,
c. Le cas échéant, l'ajout à la fraction solide de l'étape b), d'eau d'apport et/ou d'un additif retardateur de prise,
d. L'ajout de l'émulsion telle que définie à l'une quelconque des revendications 1 à 8 à la fraction solide de l'étape a), b) ou c).

12. Procédé de fabrication de couche de roulement ou couche d'accrochage comprenant
- la préparation d'un matériau bitumineux coulé à froid selon l'une quelconque des revendications 1 à 9 ; puis
- l'épandage du matériau bitumineux à une température ambiante variant de 5°C à 40°C et à un degré d'hygrométrie pouvant aller jusqu'à 100 % ;
- puis remise sous trafic, avantageusement dans l'heure, plus avantageusement dans la demi-heure, après l'épandage.

13. Utilisation combinée dans un matériau bitumineux coulé à froid (a) d'une émulsion cationique de bitume telle que définie à la revendication 1, (b) d'un additif tel que défini à l'une quelconque des revendication 1 à 8, et avantageusement d'additif minéral ajouté à la fraction solide, notamment la fraction solide minérale, pour améliorer la montée en cohésion dudit matériau bitumineux coulé à froid.

## Patentansprüche

1. Bituminöses Kalteinbaumaterial, das durch Mischen eines festen Anteils, insbesondere eines mineralischen festen Anteils, mit einer kationischen Bitumenemulsion erhalten wird, wobei die kationische Bitumenemulsion Wasser, ein kohlenwasserstoffhaltiges Bindemittel, mindestens einen Emulgator und eine Säure umfasst, wobei das kohlenwasserstoffhaltige Bindemittel Bitumen und ein Additiv umfasst, **dadurch gekennzeichnet, dass** das kohlenwasserstoffhaltige Bindemittel von 0,02 bis 10 Gew.-% an dem Additiv, bezogen auf das Gewicht des Bindemittels, umfasst, und dadurch, dass das Additiv ein thermoplastisches Polymer ist, das mit dem Bitumen verträglich ist, mindestens eine Carboxylsäurefunktion aufweist, wobei das Polymer ausgewählt ist aus einem Polyester, einem Polyamid, einem Poly(esteramid), einem Polyether, einem Polyacrylat, einem Polydien oder einem Copolymer von Dien- und Vinylmonomeren und ihren Kombinationen.

2. Material nach Anspruch 1, **dadurch gekennzeichnet, dass** das thermoplastische Polymer eine oder mehrere der folgenden Eigenschaften erfüllt:
- das thermoplastische Polymer weist einen Säureindex von kleiner als 200 mgKOH/g, vorteilhafterweise von kleiner als 80 mgKOH/g, auf;
- das thermoplastische Polymer weist eine Molekularmasse in Gewicht von mindestens 500 g/mol, vorteilhafterweise von 500 g/mol bis 50 000 g/mol, noch vorteilhafter von 500 g/mol bis 5000 g/mol, auf.

3. Bituminöses Kalteinbaumaterial nach einem der vorhergehenden Ansprüche, **dadurch gekennzeichnet, dass** das Polymer durch Polymerisation von mindestens einer Hydroxysäure mit der Formel (I) erhalten wird:
HO-C(O)-R-CR'(OH)-R" (I)
wo:
- R eine gesättigte oder ungesättigte, gegebenenfalls verzweigte, aliphatische C8-C20-Kohlenwasserstoffkette ist, die gegebenenfalls ein oder mehrere Sauerstoffatome umfasst, eine lineare Hauptkette mit mindestens 8 Kohlenstoffatomen umfasst; und
- R', R" jeweils unabhängig voneinander H oder eine aliphatische C1-C10-Kohlenwasserstoffkette darstellen;
gegebenenfalls bei Vorhandensein mindestens einer zweiwertigen Carboxylsäure mit der Formel (III):
HO-C(O)-R2-C(O)-OH (III)
wo
- R2 eine gesättigte oder ungesättigte, gegebenenfalls verzweigte, aliphatische C1-C60 Kohlenwasserstoffkette ist, die gegebenenfalls ein oder mehrere Sauerstoffatome oder eine aromatische Gruppe umfasst.

4. Bituminöses Kalteinbaumaterial nach einem der Ansprüche 1 bis 3, **dadurch gekennzeichnet, dass** das Polymer ausgewählt ist aus Poly(rizinusölsäure), Poly(12-Hydroxystearinsäure) und ihren Kombinationen.

5. Bituminöses Kalteinbaumaterial nach einem der Ansprüche 1 bis 2, **dadurch gekennzeichnet, dass** das Polymer durch Copolymerisation einer zweiwertigen Säure mit einer di-funktionalisierten Verbindung erhalten wird, die ausgewählt ist aus einem Diol, einem Diamin und ihren Kombinationen, wobei die zweiwertige Säure ausgewählt ist aus dem Dimer von Fettsäuren, Sebacinsäure, Azelainsäure, Adipinsäure, Glutarsäure, Succinsäure, Maleinsäure, Itaconsäure und ihren Kombinationen, das Diol ausgewählt ist aus Dodecandiol, Decandiol, Hexandiol, Butandiol, Propandiol, Hydroxyl-terminierten Polybutadienen, Hydroxyl-terminierten Polytetrahydrofuranen, Hydroxyl-terminierten Polypropylenglycolen und ihren Kombinationen, das Diamin ausgewählt ist aus Tetramethylendiamin, Hexamethylendiamin, Decandiamin und ihren Kombinationen.

6. Bituminöses Kalteinbaumaterial nach einem der Ansprüche 1 bis 2, **dadurch gekennzeichnet, dass** das Polymer durch eine Kondensations- oder Ringöffnungsreaktion erhalten wird, die ausgewählt ist aus:
- der Kondensation eines Mono- oder Dihydroxyl-terminierten Polyethers und einer überschüssigen Polysäure;
- der Ringöffnung eines zyklischen Anhydrids mit einem Mono- oder Dihydroxyl-terminierten Polyether;
- der Kondensation eines Mono- oder Dihydroxyl-terminierten Polydiens und einer überschüssigen Polysäure;
- der Ringöffnung eines zyklischen Anyhdrids mit einem Mono- oder Dihydroxyl-terminierten Polydien;
wobei der Polyether vorteilhafterweise ausgewählt ist aus Polytetrahydrofuran, Polypropylenglykol und ihren Kombinationen; das Polydien vorteilhafterweise ausgewählt ist aus Polybutadien, Polyisopren, Isopren-Butadien-Copolymeren und ihren Kombinationen.

7. Bituminöses Kalteinbaumaterial nach einem der Ansprüche 1 bis 2, **dadurch gekennzeichnet, dass** das Polymer ein Polyacrylat ist, das durch Polymerisation der Acryl- oder Metacrylsäure mit Acryl- oder Metacrylsäure-Estern erhalten wird, wobei das Polymer insbesondere ein Polyacrylat ist, das ausgewählt ist aus einem Copolymer aus (Meth)acrylsäure und Butylacrylat, einem Copolymer aus (Meth)acrylsäure und 2-Ethylhexylacrylat, einem Copolymer aus (Meth)acrylsäure, Butylacrylat und 2-Ethylhexylacrylat und ihren Kombinationen.

8. Bituminöses Kalteinbaumaterial nach einem der Ansprüche 1 bis 2, **dadurch gekennzeichnet, dass** das Polymer durch Copolymerisation von Dien- und Vinylmonomeren und Maleinanhydrid, wobei das Polymer insbesondere ein Copolymer auf Basis von Monomeren von Butadien, Styrol und Maleinanhydrid ist, dann Modifikation durch Öffnung des Maleinanhydrids mittels eines Monoalkohols erhalten wird.

9. Bituminöses Kalteinbaumaterial nach einem der vorhergehenden Ansprüche, **dadurch gekennzeichnet, dass** der feste Anteil, insbesondere der mineralische feste Anteil, ein mineralisches Additiv umfasst.

10. Verwendung des bituminösen Kalteinbaumaterials nach einem der vorhergehenden Ansprüche zur Herstellung von Deckschichten, Haftschichten oder provisorischen Deckschichten.

11. Verfahren zur Herstellung eines bituminösen Kalteinbaumaterials mit höheren Schnellbindungseigenschaften, das Folgendes umfasst:
a. Herstellung eines festen Anteils, insbesondere eines mineralischen festen Anteils,
b. vorteilhafterweise Beimengung eines mineralischen Additivs zum festen Anteil von Schritt a),
c. gegebenenfalls, Beimengung einer Wassergabe und/oder eines Abbindeverzögerungsadditivs zu dem festen Anteil von Schritt b),
d. Beimengung der Emulsion nach einem der Ansprüche 1 bis 8 zu dem festen Anteil von Schritt a), b) oder c).

12. Verfahren zur Herstellung einer Deckschicht oder Haftschicht, das Folgendes umfasst:
- Herstellung eines bituminösen Kalteinbaumaterials nach einem der Ansprüche 1 bis 9; dann
- Ausbreiten des bituminösen Materials bei einer Umgebungstemperatur von 5°C bis 40°C und mit einem Feuchtigkeitsgrad von bis zu 100%;
- dann Freigabe für den Verkehr, vorteilhafterweise innerhalb von einer Stunde, noch vorteilhafterweise innerhalb von einer halben Stunde, nach dem Ausbreiten.

13. Kombinierte Verwendung von (a) einer kationischen Bitumenemulsion nach Anspruch 1, (b) eines Additivs nach einem der Ansprüche 1 bis 8 und vorteilhafterweise eines dem festen Anteil, insbesondere dem mineralischen festen Anteil, beigemengten mineralischen Additivs in einem bituminösen Kalteinbaumaterial zum Verbessern der Bindung des bituminösen Kalteinbaumaterials.

## Claims

1. A cold-mix bituminous material, obtained by mixing a solid fraction, in particular a mineral solid fraction, with a cationic bitumen emulsion, said cationic bitumen emulsion comprising water, a hydrocarbon binder, at least one emulsifier and an acid, wherein the hydrocarbon binder comprises bitumen and an additive, **characterised in that** the hydrocarbon binder comprises 0.02% to 10% by weight of said additive relative to the weight of the binder, and **in that** said additive is a thermoplastic polymer compatible with bitumen, having at least one carboxylic acid function, the polymer being chosen from a polyester, a polyamide, a poly(ester-amide), a polyether, a polyacrylate, a polydiene, or a copolymer of diene and vinyl monomers, and the combinations thereof.

2. The material according to claim 1, **characterised in that** the thermoplastic polymer responds to one or more of the following features:
- the thermoplastic polymer has an acid index less than 200 mgKOH/g, advantageously less than 80 mgKOH/g;
- the thermoplastic polymer has a molecular mass by weight of at least 500 g/mol, advantageously from 500 g/mol to 50,000 g/mol, more advantageously from 500 g/mol to 5000 g/mol.

3. The cold-mix bituminous material according to any one of the preceding claims, **characterised in that** the polymer is obtained by polymerisation of least one hydroxy acid of formula(I):
HO-C(O)-R-CR'(OH)-R" (1)
where
- R is a saturated or unsaturated, C8-C20, aliphatic hydrocarbon chain, that is optionally branched, optionally comprising one or more oxygen atoms, comprising a main linear chain of at least 8 carbon atoms; and
- R', R" each represent, independently of one another, H or a C1-C10, aliphatic hydrocarbon chain;
optionally in the presence of at least one carboxylic diacid of formula (III):
HO-C(O)-R2-C(O)-OH (III)
where
- R2 is a saturated or unsaturated, C1-C60, aliphatic hydrocarbon chain, that is optionally branched, optionally comprising one or more oxygen atoms, or an aromatic group.

4. The cold-mix bituminous material according to any one of claims 1 to 3, **characterised in that** the polymer is chosen from poly(ricinoleic acid), poly(12-hydroxystearic acid) and the combinations thereof.

5. The cold-mix bituminous material according to any one of claims 1 to 2, **characterised in that** the polymer is obtained by copolymerisation of a diacid with a di-functionalised compound, chosen from a diol, a diamine and the combinations thereof, the diacid is chosen from the dimer fatty acids, sebacic acid, azelaic acid, adipic acid, glutaric acid, succinic acid, maleic acid, itaconic acid and the combinations thereof, the diol is chosen from dodecanediol, decanediol, hexane diol, butanediol, propanediol, hydroxy-telechelic polybutadienes, hydroxy-telechelic polytetrahydrofuran, hydroxy-telechelic polypropylene glycol and the combinations thereof, the diamine is chosen from tetramethylene diamine, hexamethylene diamine, decanediamine and the combinations thereof.

6. The cold-mix bituminous material according to any one of claims 1 to 2, **characterised in that** the polymer is obtained by a condensation or ring opening reaction, chosen from:
- condensation of a mono polyether or dihydroxy-telechelic and a polyacid in excess;
- opening the ring of a cyclic anhydride with a mono polyether or dihydroxy telechelic;
- condensation of a mono or dihydroxy-telechelic polydiene and a polyacid in excess;
- opening the ring of a cyclic anhydride with a mono or dihydroxy telechelic polydiene;
the polyether is advantageously chosen from, polytetrahydrofurane, polypropylene glycol, and the combinations thereof; the polydiene is advantageously chosen from polybutadiene, polyisoprene, copolymers of isoprene-butadiene and the combinations thereof.

7. The cold-mix bituminous material according to any one of claims 1 to 2, **characterised in that** the polymer is a polyacrylate obtained by polymerisation of acrylic or methacrylic acid with acrylic or methacrylic acid esters, in particular the polymer is a polyacrylate chosen from a (meth)acrylic acid and butyl acrylate copolymer, a (meth)acrylic acid and 2-ethylhexyl acrylate copolymer, a (meth)acrylic acid, butyl acrylate and 2-ethylhexyl acrylate copolymer, and the combinations thereof.

8. The cold-mix bituminous material according to any one of claims 1 to 2, **characterised in that** the polymer is obtained by copolymerisation of diene and vinyl monomers and maleic anhydride, in particular the polymer is a copolymer based on monomers of butadiene, styrene and maleic anhydride, then modification by opening of the maleic anhydride using a mono-alcohol.

9. The cold-mix bituminous material according to any one of the preceding claims, **characterised in that** the solid fraction, in particular the mineral solid fraction, comprises a mineral additive.

10. Use of the cold-mix bituminous material according to any one of preceding claims, for producing wearing courses, adhesive layer or temporary wearing layer.

11. A method for preparing a cold-mix bituminous material having improved cohesion-building properties, comprising:
a. preparing a solid fraction, in particular a mineral solid fraction,
b. advantageously, adding a mineral additive to the solid fraction of step a),
c. where appropriate, adding feed water and/or a setting-retardant additive to the solid fraction of step b),
d. adding the emulsion as defined in any one of claims 1 to 8 to the solid fraction of step a), b) or c) .

12. A method for producing a wearing course or adhesive layer, comprising
- preparing a cold-mix bituminous material according to any one of claims 1 to 9; then
- spreading the bituminous material at ambient temperatures varying from 5°C to 40°C and at a humidity level which can be up to 100%;
- then returning to traffic, advantageously within one hour, more advantageously within half an hour, after spreading.

13. A combined use in a cold-mix bituminous material of (a) a cationic bitumen emulsion as defined in claim 1, (b) an additive as defined in any one of claims 1 to 8, and advantageously mineral additive added to the solid fracture, in particular the mineral solid fraction, in order to improve the cohesion-building of said cold-mix bituminous material.
